# EUROPEAN PATENT SPECIFICATION

(11) **EP 3 213 656 B1**
(45) Date of publication and mention of the grant of the patent: **29.06.2022**
(21) Application number: 17000304.0
(22) Date of filing: 27.02.2017
(51) Int. Cl.: A45F 5/02

(54) **CLIP OF AN ITEM HOLDER**
KLAMMER EINES ELEMENTHALTERS
AGRAFE D'UN PORTE-ARTICLE

(30) Priority: 01.03.2016 CZ 20160120
(43) Date of publication of application: 06.09.2017
(73) Proprietor: Kostal, Bretislav, 106 00 Praha 10 (CZ); Kupa, Vladimír, 150 00 Praha 5 (CZ)
(72) Inventor: Kostal, Bretislav, 106 00 Praha 10 (CZ); Kupa, Vladimír, 150 00 Praha 5 (CZ)
(74) Representative: Sedlák, Jirí

(56) References cited:
- WO-A1-03/096839
- US-A- 5 622 296
- US-A- 5 927 580

## Description

### Field of the invention

The invention concerns a combination of a clip for an item holder for the group of a firearm, a cold weapon or a flashlight, to a clothing or a belt and an item holder, with a clamping wall and connecting elements for the holder.

### Background of the invention

Clips for holders are designed to attach holders of personal items, particularly on various parts of gear or clothing, e.g. on a belt. The attached items may include light firearms or cold weapons, as well as flashlights, various tools etc., which may be attached directly on the gear to guarantee easy access for the user. The attaching mechanism of the holder and of the clip may be the same for several types of holders and one clip thus may be used to connect several types of items.

An example of a clip with outside straps adjustable to the belt width is a clip made based on EP 1604587. The clip is attached to a holder with an attachment mechanism containing screw connections and the mutual bearing surfaces of the holder and of the clip are provided with interlocking round toothing which, if the right pressure is applied, enable to turn the holder and the respective item into a desired angle position in respect to the belt and to keep the holder in the desired position.

Another simple variant of the clip is shown in the industrial design RCD 0022236324. In this clip the outer straps are replaced with an enclosed sleeve to slide on a belt. The sleeve is inside provided with a moving adapter that allows to set up a gap between the bearing surfaces of the sleeve based on the belt's width. A similar screw connection is used to attach the holder to the clip as in the above described variant.

One of the potential variants of the holder designed for a pocket flashlight and suitable for attachment to the clip described above is shown in RCD 001958181. On its surface facing the clip the holder is provided with an opening with round toothing along its perimeter and a system of pins as a part of the attaching mechanism. In combination with the clip the toothing fits into the corresponding toothing on the front side of the clip and the pins fit into openings in the adapter placed on the back side of the front wall of the clip. The adapter is attached to the holder with a screw connection. This attachment mechanism allows, identically as the variant according to the above-described European patent, to turn the holder into different positions in respect to the belt.

One disadvantage of the above-described clips consists in the screw connection between the clip and the holder which is reliable but its installation requires certain time and skills to handle the relatively small pieces that make up the connection. This also implies that it is practically impossible to attach a given clip to a different holder.

WO 03/096839 provides a quick-release arrangement for a hand-held device comprising a belt clip and an engagement element, wherein the belt clip is adapted to fit on a user's belt or waistband; the engagement element is attachable to a hand-held device; and the belt clip has a retaining portion shaped to slidably accept the engagement element to a limit point and to form an interference fit with the engagement element at said limit point.

Preferably the retaining portion has a retaining lip for embracing the engagement element, the retaining lip defines a space into which the head portion of the engagement element can be inserted. The narrower neck portion of engagement element then abuts the retaining lip.

The interference fit is preferably provided by resilient co-operation between a tooth and a recess, where the tooth is usually on the retaining potion and the recess is in the engagement portion. In one embodiment, the retaining portion preferably includes a release lever (which itself is preferably spring) for separation of the tooth and the recess to allow removal of the engagement element.

The disadvantage of the solution according to WO 03/096839 is that the engagement element (is not held in the clip in any way from above. As described in WO 03/096839, the clip is made of plastic. As soon as the plastic parts become tired by aging and UV radiation, the release lever and the biasing spring have a small compressive force. Also, the edges of the tooth and the recess are abraded and worn with use. It is then very easy to pull the engagement element from the clip upwards without using the handle. If the item connected to the engagement element is a weapon, then for example, an attacker can easily pull a weapon from the clip on the belt and attack it against the user or against an another person. With even more fatigue, the weapon may fall out from the clip due to its weight, for example, when the user is crawled.

The purpose of the invention is to create a clip with a design allowing fast and, at the same time, safe replacement of different holders attached to the clip without using a screw connection.

### Summary of the invention

The invention is defined by the features of the appended claims. The invention of a combination of a clip for an item holder to an clothing or a belt and item holder comprises a clamping wall which is provided with opposite guiding plates ended with a circular landing and lateral surfaces, a turning catch and with a spring pushing the catch arm on the inner side to the guiding plates.

The clamping wall is on its back side provided with a partition which outlines a space in the clamping wall to insert connecting elements of the holder.

A round toothing is executed on the clamping wall along the perimeter of the circular landing.

The catch is in the form of a two-armed lever with the controlled upper arm.

The clamping wall is attached to the back wall via lateral surfaces and a bridge so that a space is created between the clamping wall and the back wall to insert a belt or harness.

In the space between the clamping wall and the back wall there is an adapter containing means to secure the position between the clamping wall and the back wall.

The key advantage of the clip under this invention consists in easy and fast connection/disconnection of the item holder to/from the clip while keeping the opportunity to turn the items into different positions with regard to the clip and keeping the holder in that position. Another advantage is that the clip is more universal and therefore the holders, and thus also the items, attached to one clip may be easily and safely replaced.

### Description of drawings

One of the potential embodiments of the clip for attachment of replaceable holders on a belt is shown in the enclosed drawing, where:
- Fig. 1 -: is an axonometric view of the clip under the invention;
- Fig. 2 -: is an axonometric view of the securing element of the clip;
- Fig. 3 -: is a cross section of the clip and connection parts of the holder the shape of which is outlined.

### Example of embodiment of the invention

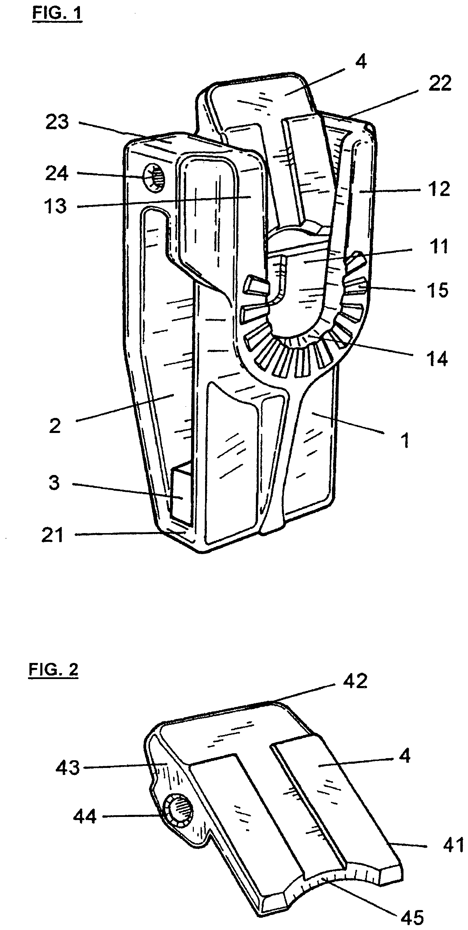

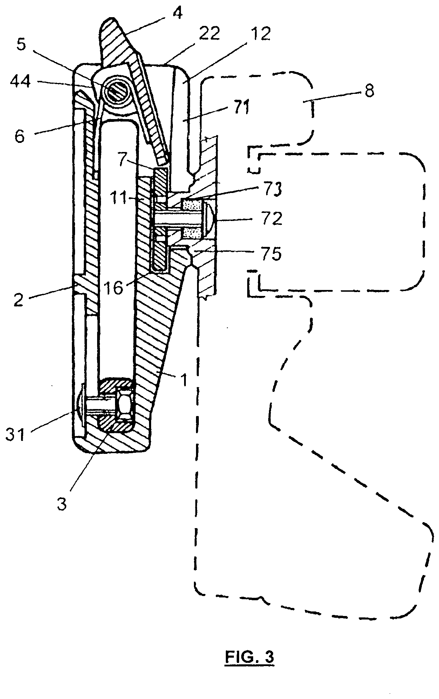

The example shows one of possible embodiments of the clip for a holder under the invention, specifically for attachment to a belt. As shown in the axonometric view in Fig. 1 and in the cross-section in Fig. 3., the clip has a clamping wall 1 and a back wall 2 that are mutually connected with a bridge 21 in the bottom part and with two opposite lateral surfaces 22 and 23 in the upper part. The belt is supposed to be inserted into the space between the walls. The clamping wall 1 continues with the lateral surfaces 22 and 23 and guiding plates 12 and 13 ended with a circular landing 14. The circular landing 14 in the clamping wall 1 is provided with an interrupted planar round toothing 15. The cross-section in Fig. 3 shows that the clamping wall 1 is partly doubled inside by means of a partition 11 and therefore free space 16 is created between the partition 11 and the guiding plates 12 and 13. Between the guiding plates 12 and 13 there is a securing element of the clip created as a catch 4. The catch is turning on a pin 5 inserted into openings 24 in the lateral surfaces 22 and 23. As shown in detail in Fig. 2, the catch 4 has an upper arm 42 and a lower arm 41 ended with a round surface 45. Between the arms 41 and 42 the catch 4 is provided with side projections 43 with openings 44 to insert the pin 5. On the central free part of the pin 5 there is a pressing spring 6, with one of its arms propped against the inner surface of the back wall 2 and the other arm against the catch 4. The spring 6 thus pushes the catch 4 on the inner surface of the guiding plates 12 and 13.

The guiding plates 12 and 13 are designed to insert attaching elements of the holder 8. In Fig. 3 the holder is only outlined, with the exception of the attaching elements shown in the cross-section. The elements include a nut 7 and a cylindrical lug 71, to which the nut 7 is attached with a screw connection 72, and also the planar round toothing 75 that is complementary to the circular toothing 15 on the clip.

In the space between the clamping wall 1 and the back wall 2 there is a moving adapter 3 with a screw connection 31. The free part of the screw connection 31 is placed in a groove in the back wall 2 which allows to set up and to fix the adapter 3 in a position that defines the size of the free space between the walls so that it is appropriate for the belt height.

In order to attach the holder 8 to the clip the cylindrical lug 71 with the nut 7 is inserted from above between the guiding plates 12 and 13. At the same time, the catch 4 is pushed into the inner space of the clip and the nut 7 is inserted into the free space 16 behind the partition 11. In a position when the cylindrical lug 71 gets into contact with the landing 14 and the nut is under the lower arm 41 and under the round surface 45 of the catch 4, the catch 4 is released and falls back on the inner side of the guiding plates 12 and 13. The nut 7 props against the inner surface 45 of the arm 41 and this secures safe attachment of the holder 8 in the clip. The planar round toothing 15 on the clamping wall 1 and the complementary planar round toothing 75 on the back side of the holder 8 form an interface between the clip and the holder 8, while the surfaces are pushed against each other by an elastic element 73. The cylindrical shape of the lug 71 allows its turning on the landing 14 and the mutually interlocking planar toothing on the clamping wall 1 of the clip and on the back side of the holder 8 fix the holder on the clip also in a turned position, while the strength of the fixing is defined by prestressing of the elastic element 73.

The holder is taken out from the clip by pressing the upper arm 42 of the catch 4 towards the guiding plates 12 and 13. The surface 45 thus releases the nut 7 and the entire holder 8 can be taken out from the clip in the direction away from the circular landing 14.

The clip for the item holder is not limited to the application described above, i.e. attachment to a belt. To attach the clip to a different part of gear or clothing the clip does not need the back wall and its clamping wall may be provided with another suitable clamping element, including a screw connection.

### Industrial applicability

The clip under the invention may be used, in combination with various holders, to suspend any type of personal items on parts of the gear or clothing or, if applicable, other equipment. The personal items may include truncheons, various defensive and offensive weapons etc., used e.g. by riot police, fire services or army. The clip may be used by other professionals as well, e.g. for works at height, mountain climbing etc.

## Claims

1. A combination of a clip for an item holder to a clothing or a belt and an item holder, for the item selected from the group of a firearm, a cold weapon or a flashlight, comprising a clamping wall (1) and connecting elements for the holder which comprise an attachment element, said clamping wall (1) comprising a space (16) to insert said attaching element of the item holder, said space (16) is outlined by a partition (11) on the backside of the clamping wall (1) as well as by opposing guiding plates (12, 13) ended with a circular landing (14) and lateral surfaces (22, 23) extending from the clamping wall (1), and further comprising a turning catch (4) between said lateral surfaces (22, 23), the catch (4) being in the form of a double-arm lever with a controlling upper arm (42), a lower arm (41) and a spring (6), **characterized in that** the catch (4) is turning on a pin (5) inserted into openings (24) in said lateral surfaces (22) and (23), and the catch (4) is pushed by the spring (6) on its lower arm (41) on the inner side of the guiding plates (12, 13).

2. A combination according to claim 1, **characterized in that** a round toothing (15) is created along the perimeter of the round landing (14) on the clamping wall (1).

3. A combination according to claim 1, **characterized in that** a back wall (2) is attached . to the clamping wall (1) with lateral surfaces (22, 23) and with a bridge (21) so that between the clamping wall (1) and the back wall (2) is a space to insert a belt or harness.

4. A combination according to claim 3, **characterized in that** an adapter (3) is inserted . in the space between the clamping wall (1) and the back wall (2) with means to secure its position between the clamping wall (1) and the back wall (2).

## Patentansprüche

1. Kombination eines Halters für einen Gegenstandsträger an einem Kleidungsstück oder an einem Gürtel und eines Gegenstandsträgers für einen Gegenstand, der aus der Gruppe einer Feuerwaffe, einer Blankwaffe oder einer Taschenlampe ausgewählt ist, umfassend eine Klemmwand (1) und Verbindungselemente für den Träger, die ein Befestigungselement umfassen, wobei die Klemmwand (1) einen Raum (16) zum Einsetzen des Befestigungselements des Gegenstandsträgers umfasst, wobei der Raum (16) durch eine Trennwand (11) auf der Rückseite der Klemmwand (1) sowie durch gegenüberliegende Führungsplatten (12, 13) begrenzt wird, wobei die Führungsplatten (12, 13) mit einem kreisförmigen Absatz (14) und Seitenflächen (22, 23) enden, die sich von der Klemmwand (1) aus erstrecken, und ferner eine Klinke (4) zwischen den Seitenflächen (22, 23) umfasst, wobei die Klinke (4) die Form eines zweiarmigen Hebels mit einem oberen Steuerarm (42) einem unteren Arm (41) und einer Feder (6), **dadurch gekennzeichnet, dass** die Klinke (4) sich um einen Stift (5) dreht, der in Öffnungen (24) in den Seitenflächen (22) und (23) eingesetzt ist, und dass die Klinke (4) durch die Feder (6) an ihrem unteren Arm (41) auf die Innenseite der Führungsplatten (12, 13) gedrückt wird.

2. Kombination nach Anspruch 1, **dadurch gekennzeichnet, dass** entlang des Umfangs des kreisförmigen Absatzes (14) an der Klemmwand (1) eine kreisförmige Verzahnung (15) erzeugt wird.

3. Kombination nach Anspruch 1, **dadurch gekennzeichnet, dass** eine Rückwand (2) mit Seitenflächen (22, 23) und mit einer Brücke (21) an der Klemmwand (1) befestigt ist, so dass zwischen der Klemmwand (1) und der Rückwand (2) ein Raum zum Einlegen eines Gürtels oder Gurtes vorhanden ist.

4. Kombination nach Anspruch 3, **dadurch gekennzeichnet, dass** in den Raum zwischen der Klemmwand (1) und der Rückwand (2) ein Spannelement (3) mit Mitteln zur Sicherung seiner Position zwischen der Klemmwand (1) und der Rückwand (2) eingesetzt ist.

## Revendications

1. Combinaison d'un clip pour un support d'article sur un vêtement ou une ceinture et d'un support d'article, pour l'article choisi dans le groupe d'une arme à feu, d'une arme blanche ou d'une lampe de poche, comprenant une paroi (1) de serrage et des éléments de connexion pour le support qui comprennent un élément de fixation, ladite paroi (1) de serrage comprenant un espace (16) pour insérer ledit élément de fixation du support d'article, ledit espace (16) est délimité par une cloison (11) sur le côté arrière de la paroi (1) de serrage ainsi que par des plaques (12, 13) de guidage opposées terminées par une butée (14) circulaire et des surfaces (22, 23) latérales s'étendant depuis la paroi (1) de serrage, et comprenant en outre un loquet (4) tournant entre lesdites surfaces (22, 23) latérales, le loquet (4) ayant la forme d'un levier à deux bras avec un bras (42) supérieur de commande, un bras inférieur (41) et un ressort (6), **caractérisé en ce que** le loquet (4) tourne sur un pivot (5) inséré dans des ouvertures (24) dans lesdites surfaces (22, 23) latérales, et le loquet (4) est poussé par le ressort (6) sur son bras inférieur (41) sur le côté intérieur des plaques (12, 13) de guidage.

2. Combinaison selon la revendication 1, **caractérisée en ce qu'**un engrenage (15) circulaire est créé le long du périmètre de la butée (14) circulaire sur la paroi (1) de serrage.

3. Combinaison selon la revendication 1, **caractérisée en ce qu'**une paroi (2) arrière est fixée à la paroi (1) de serrage avec des surfaces (22, 23) latérales et avec un pont (21) de sorte qu'entre la paroi (1) de serrage et la paroi (2) arrière se trouve un espace pour insérer une ceinture ou un harnais.

4. Combinaison selon la revendication 3, **caractérisée en ce qu'**un élément (3) de serrage est inséré dans l'espace entre la paroi (1) de serrage et la paroi (2) arrière avec des moyens pour fixer sa position entre la paroi (1) de serrage et la paroi (2) arrière.
